# EUROPEAN PATENT SPECIFICATION

(11) **EP 3 688 419 B1**
(45) Date of publication and mention of the grant of the patent: **05.05.2021**
(21) Application number: 18788891.2
(22) Date of filing: 24.09.2018
(51) Int. Cl.: G01F 15/00, G01F 1/66, G01F 1/68

(54) **SENSOR-VALVE ASSEMBLY FOR GAS METER, GAS METER USING THE SAME AND METHOD FOR CONTROLLING A GAS METER**
SENSORVENTILANORDNUNG FÜR GASZÄHLER, GASZÄHLER MIT VERWENDUNG DAVON UND VERFAHREN ZUR STEUERUNG EINES GASZÄHLERS
ENSEMBLE CAPTEUR-VANNE POUR COMPTEUR DE GAZ, COMPTEUR DE GAZ UTILISANT CELUI-CI ET PROCÉDÉ DE COMMANDE D'UN COMPTEUR DE GAZ

(30) Priority: 25.09.2017 IT 201700107229
(43) Date of publication of application: 05.08.2020
(73) Proprietor: Metersit S.r.l., 35129 Padova (IT)
(72) Inventor: FONTANA, Camillo, 35129 Padova (IT); COLOMBO, Pierangelo, 35129 Padova (IT); RAMPAZZO, Francesco, 35129 Padova (IT)
(74) Representative: Di Bernardo, Antonio
(86) International application number: PCT/IB2018/057361
(87) International publication number: WO 2019/058341

(56) References cited:
- WO-A1-2013/156946
- WO-A1-2014/135973
- US-A1- 2017 241 822

## Description

### TECHNICAL FIELD

The present invention relates to a sensor-valve assembly for gas meter, a gas meter using the same and a method for controlling a gas meter. More specifically, the present invention relates to a sensor-valve assembly for gas meter of the compact and reduced-consumption type.

### BACKGROUND ART

Over the last few years, gas meters have been developed which are capable of taking a static measurement of the flow passing through an electronic sensor, for example a thermal mass sensor, an ultrasonic sensor or other suitable electronic sensor, placed inside a measuring compartment which, through a suitable valve, puts the national distribution network in connection with the utility branch.

Static meters of this type are for example described in documents US 2017/241822 and WO 2013/156946, which both describe gas meters provided with a measuring compartment inside of which there is placed a measuring sensor and an electronic management device placed outside the compartment. Moreover, also document WO 2014/135973 describes a measuring sensor which interfaces with an electronic device for managing the same.

While measuring and taking a consumption reading in traditional, volumetric or diaphragm meters occurs by means of mechanical systems not requiring an electric power supply, static meters require a battery power supply capable of supplying the measuring sensor and the relative electronic management device with power for a significant number of years, which is compatible with the legal duration of the measuring stamp.

This has required significant attention in the development of technical solutions (electronic, circuit, management) with low energy consumption that on one hand ensure lengthy operating periods and periods in the field while on the other hand allow operating the remote reading and the remote management of the meters.

For such purpose, the electronic part of the meters indeed requires the presence of a communication interface (for example, GPRS, 169MHz/868MHz Mbus, 2.4GHz ZigBee, etc.) in addition to a valve for controlling the valve, microprocessors, electronic displays, power and supply components, drivers for reading sensors, etc., implemented on an electronic processing board placed outside the measuring compartment.

The Applicant has observed that the electronic processing board in currently known static type gas meters is programmed to be activated at rather reduced fixed intervals (for example, every 2 seconds) in order to stimulate and acquire the reading taken by the electronic sensor. Therefore, the sensor is also activated at each query in order to take and send the measurement to the electronic board.

The Applicant has therefore considered that the regular activation both of the electronic processing board and of the sensor results in a consumption of power which, albeit minimum, is repeated a significant number of times within the life of the gas meter, thus significantly reducing the autonomy thereof, battery being equal.

The Applicant has also noted that the architecture of the electronic part actually implemented in gas meters of the static type requires an increased number of electric connections between the electronic processing board and the components inside the measuring compartment. Specifically, the valve requires up to 6 connections, comprising a motor (DC or stepper motor) and optionally an (open/closed) position sensor, and the measuring sensor requires up to 8 connections, comprising an interface for the measurement and in the case of ultrasound sensor, a pressure sensor and a temperature sensor.

Such connections are extremely costly because they are to ensure the hold of the gas, it therefore being desirable to keep the number as low as possible.

Not lastly, the Applicant has noted the need to reduce the encumbrances of the measuring compartment intended to house the sensor and the valve, and a need to standardize the shape thereof in order to make it compatible with a plurality of size requirements of the connections to the utility networks in force in the different regions.

The Applicant has therefore perceived the need to optimize the architecture of the gas meters and in particular of the relative sensor-valve assembly both from a structural viewpoint and from a functional viewpoint, in order to reduce the consumption, the encumbrances and the components required to implement them.

### OBJECTS AND SUMMARY OF THE INVENTION

In light of that above, the problem at the basis of the present invention is the one of conceiving a sensor-valve assembly for gas meter which has an optimized architecture in terms of consumption, electric connections and encumbrances.

Within the scope of such problem, it is an object of the present invention to make a sensor-valve assembly for gas meter which has a reduced consumption of overall power of the meter.

It is another object of the present invention to make a sensor-valve assembly for gas meter which requires a minimum number of connections between the components housed in the measuring compartment and the electronic processing board placed outside.

Not lastly, it is an object of the present invention to study a sensor-valve assembly for gas meter with reduced encumbrance.

According to a first aspect thereof, the invention therefore relates to a sensor-valve assembly for gas meter comprising a housing body configured to be housed inside a measuring compartment of a gas meter defined inside a hollow body of the gas meter provided with a gas inlet duct and a gas outlet duct. The housing body comprises at least one measuring device configured to measure a gas flow passing through the group and an intercept device to intercept the gas flow passing through the group, wherein it comprises at least one electronic processing unit mounted in or on the housing body and provided with storage means, the electronic processing unit being operatively connected to the measuring device and configured for storing in the storage means a plurality of measurement values detected by the measuring device, the electronic processing unit further being operatively connected to the intercept device and configured to control its opening and/or closing.

The Applicant has discovered that thanks to the storage possibility of a plurality of measurement values directly in or on the sensor-valve assembly which in use is located inside the measuring compartment of the gas meter, it is possible to significantly reduce the activation frequency of the electronic processing board external to the measuring compartment of the gas meter and accordingly, the overall energy consumption of the gas meter. Thereby, it is indeed possible to read, in one time, the series of data stored in the storage means on board the sensor-valve assembly during a predefined time period and relative to a plurality of measurements, thus drastically reducing the consumption of the meter highly affected by the number of activations of the electronic processing board external to the measuring compartment.

Moreover, the operating connection between the processing element and the intercept device allows reducing the number of connections which go from the inside of the measuring compartment of the gas meter to the electronic processing board placed outside. To control the intercept device, it is indeed sufficient to provide a connection between the processing board (external) and the electronic processing unit provided in the sensor-valve assembly (internal) because the controls generated by the external board may be processed by the internal processing element and converted into corresponding control signals for the intercept device. It is therefore no longer necessary to provide a direct connection between the intercept device and the external electronic processing board.

Not lastly, the provision of an electronic processing unit operatively connected both to the measuring device and to the intercept device and mounted in or on the housing body of such devices allows an integration of such devices which results in an optimization of the overall encumbrances of the sensor-valve assembly.

According to a second aspect thereof, the invention relates to a gas meter comprising a hollow body internally defining a measuring compartment provided with a gas inlet duct and a gas outlet duct, a sensor-valve assembly placed inside the measuring compartment and in fluid communication with both the inlet duct and the outlet duct, and at least one electronic processing board placed outside the measuring compartment and operatively connected to the sensor-valve assembly for supplying power to the same and/or receiving the flow measurement values detected by the group and/or sending control signals for intercepting the flow, the sensor-valve assembly comprising a housing body in which at least one measuring device configured to measure a gas flow passing through the group and at least one intercept device to intercept the gas flow passing through the group are comprised wherein the sensor-valve assembly comprises at least one electronic processing unit housed inside the measuring compartment and provided with storage means, the electronic processing unit being operatively connected to the measuring device and configured for storing in the storage means a plurality of measurement values detected by the measuring device, the electronic processing unit further being operatively connected to the intercept device and configured to control its opening and/or closing, the electronic processing board external to the measuring compartment being operatively connected to the sensor-valve assembly through the electronic processing unit.

Advantageously, the gas meter according to the invention achieves the technical effects described above in relation to the sensor-valve assembly for gas meter.

According to a third aspect thereof, the invention relates to a method for controlling a gas meter comprising a sensor-valve assembly placed inside a measuring compartment of the gas meter and controlled and powered by means of an electronic processing board placed outside the measuring compartment of the gas meter, the sensor-valve assembly comprising a housing body in which at least one measuring device configured to measure a gas flow passing through the group and at least one intercept device to intercept the gas flow passing through the group are comprised, and at least one electronic processing unit housed inside the measuring compartment, provided with storage means and operatively connected to the measuring device, to the intercept device and to the electronic processing board external to the measuring compartment, wherein the method comprises the steps of:
- at each measurement interval, performing a measurement of the gas flow that passes through the sensor-valve assembly by means of the measuring device, and storing the measured value in the storage means of the electronic processing unit of the sensor-valve assembly;
- at every polling interval, by means of the electronic processing board placed outside the measuring compartment, reading the data stored in the storage means, wherein the polling interval lasts longer than the measurement interval.

Advantageously, the method for controlling a gas meter according to the invention achieves the technical effects described above in relation to the sensor-valve assembly for gas meter.

The present invention may have at least one of the preferred following features; the latter may in particular be combined with one another as desired in order to meet specific application needs.

Preferably, the intercept device is connected directly to the measuring device.

More preferably, the intercept device is connected directly upstream or downstream of the measuring device.

In this manner, it is advantageously possible to obtain a sensor-valve assembly having compact sizes and accordingly, to optimize the geometry of the gas meter, bringing it to a tubular shape and therefore substantially universally installable.

Preferably, the measuring device comprises a flow measuring channel and a static electronic sensor mounted at the measuring channel.

More preferably, the static electronic sensor is of the thermal mass type.

Even more preferably, the thermal mass static electronic sensor comprises a heating element interposed between two temperature probes in such a manner as to detect respectively the temperature in the measuring channel upstream and downstream of the heating element.

Of further preference, the heating element interposed symmetrically between the two temperature probes.

Such a type of sensor advantageously allows performing a measurement of the flow in a reduced space, thus simultaneously providing increased measurement reliability.

Alternatively, the static electronic sensor is of the ultrasonic type or other electronic sensor suitable for detecting a parameter correlated with the flow of gas passing through a measuring channel.

Preferably, the ultrasonic static electronic sensor is connected to two transceivers of sound waves placed one at the inlet and the other at the outlet of the measuring channel, where each is oriented in such a manner as to direct a sound wave into the channel so that the wave reflected against a wall of the channel reaches the other transceiver.

More preferably, the receives of sound waves are pressure probes.

The ultrasonic static electronic sensor exploits the correlation between a difference over time of flight of the waves sent from the inlet to the outlet and the gas flow. In this manner, it is advantageously possible to obtain precise and reliable measurements in a simple manner and in reduced spaces.

Preferably, the intercept device comprises an actuator and a closure member, wherein the movement of the closure member is controlled by the actuator.

More preferably, the intercept device is a ball valve.

Alternatively, the intercept device is a globe valve or a valve with opposed discs.

More preferably, the actuator is a direct current motor.

Alternatively, the actuator is a stepper motor, more preferably associated with a microswitch.

Preferably, the hollow body has tubular shape.

Conveniently, the tubular shape of the hollow body of the gas meter allows achieving an overall geometry of the meter suitable for being installed along any stretch of a gas line, thus making the meter compatible with a plurality of size standards in effect in the different regions.

Preferably, the sensor-valve assembly is placed at the outlet duct with the measuring device being directly connected to such outlet duct.

Thus, a correct measurement of the flow outlet from the meter is suitably ensured.

Preferably, the electronic processing board external to the measuring compartment is configured for the remote reading and the remote management of the sensor-valve assembly.

Usefully, the remote reading and the remote management of the meter allows carrying out remote operations also without access to the meter.

Preferably, the electronic processing board external to the measuring compartment is connected to the electronic processing unit of the sensor-valve assembly placed inside the measuring compartment by means of a set of connections consisting of a serial connection and a pair of connections for the power supply, without direct connections between the electronic processing board external to the measuring compartment and the intercept device of the sensor-valve assembly.

More preferably, the serial connection between the electronic processing board external to the measuring compartment and the electronic processing unit of the sensor-valve assembly placed inside the measuring compartment is configured to receive the control signals of the intercept device and to transmit the measurement values detected through the measuring device.

Even more preferably, the electronic processing unit of the sensor-valve assembly is configured to control the opening and/or closing of the intercept device based on the control signals received from the electronic processing board external to the measuring compartment.

Thanks to the particular electronic architecture of the sensor-valve assembly according to the invention, it is advantageously possible to reduce the connections that go from the electronic processing board placed outside the measuring compartment and the elements inside such compartment. Specifically, the connections between the intercept device and the external board are replaced by internal connections between the intercept device and the electronic processing unit of the sensor-valve assembly, the latter being conveniently capable of generating control signals of the intercept device based on the controls received from the external board.

Preferably, the control method additionally comprises the steps consisting in:
- monitoring the trend of the measurement values and activating the electronic processing board placed outside the measuring compartment in the event of a variation between measured values that exceeds a predefined threshold value;
- reducing the polling interval of the electronic processing board placed outside the measuring compartment as long as the variation between measurement values does not go back below the predefined threshold value.

Such management advantageously allows significantly reducing the energy consumption because the external electronic board is not activated at each measurement, while keeping unaltered managing the safety of the gas meter and the possibility of identifying sudden operating variations.

### BRIEF DESCRIPTION OF THE DRAWINGS

Further features and advantages of the present invention will be more evident from the following detailed description of certain preferred embodiments thereof made with reference to the appended drawings.

The different features in the individual configurations may be combined with one another as desired according to the preceding description, should there be advantages specifically resulting from a specific combination.

In such drawings,
- figure 1 is an axonometric view of a preferred embodiment of the sensor-valve assembly according to the present invention;
- figure 2 is a partial axonometric view of a first preferred embodiment of a gas meter using the sensor-valve assembly of figure 1;
- figure 3 is a circuit diagram of a preferred embodiment of the electronic processing unit of the sensor-valve assembly according to the present invention;
- figures 4a and 4b are respectively an axonometric view and a section view of a second preferred embodiment of a gas meter using the sensor-valve assembly of figure 1;
- figure 5 is a block diagram of a preferred embodiment of the operating method of the gas meter according to the present invention.

### DETAILED DESCRIPTION OF THE INVENTION

For the illustration of the drawings, use is made in the following description of identical numerals or symbols to indicate construction elements with the same function. Moreover, for clarity of illustration, certain references may not be repeated in all drawings.

While the invention is susceptible to various modifications and alternative constructions, certain preferred embodiments are shown in the drawings and are described hereinbelow in detail. It is in any case to be noted that there is no intention to limit the invention to the specific embodiment illustrated, rather on the contrary, the invention intends covering all the modifications, alternative and equivalent constructions that fall within the scope of the invention as defined in the claims.

The use of "for example", "etc.", "or" indicates non-exclusive alternatives without limitation, unless otherwise indicated. The use of "comprises" and "includes" means "comprises or includes, but not limited to", unless otherwise indicated.

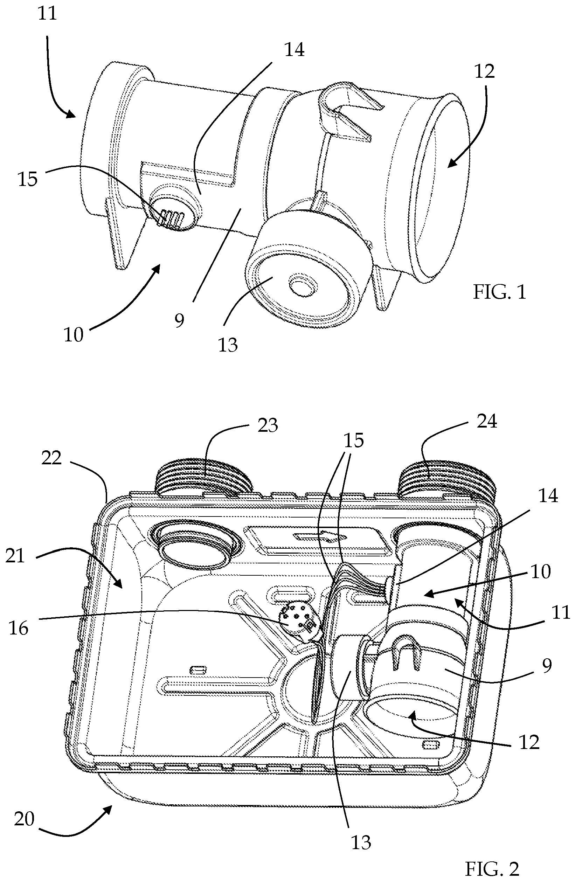

With reference to figure 1, there is illustrated a preferred embodiment of a sensor-valve assembly for gas meter according to the present invention, generally indicated with 10. The sensor-valve assembly 10 according to the present invention is of the type configured to be placed inside a measuring compartment 21 of a gas meter 20 in such a manner as to intercept a gas flow passing through the measuring compartment 21.

The sensor-valve assembly 10 comprises a housing body 9 inside of which there is comprised a measuring device 11 configured to measure a gas flow passing through the group 10.

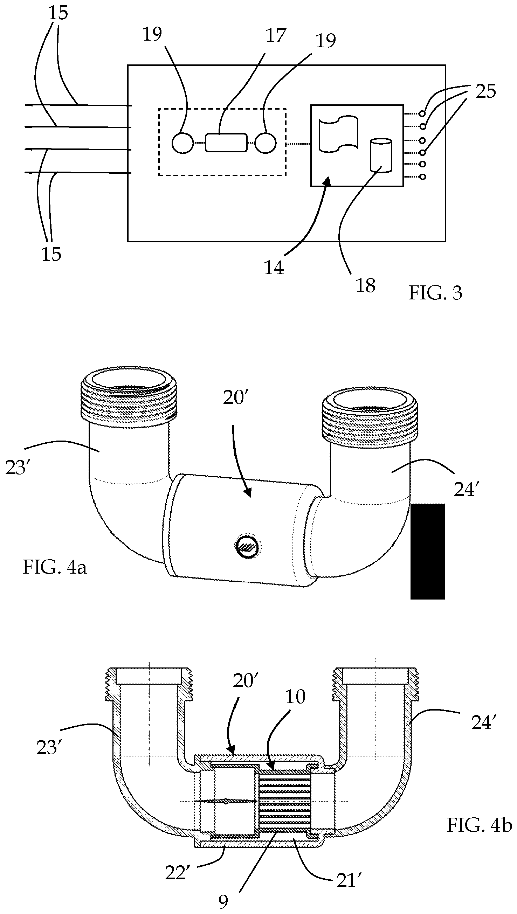

With particular reference to figure 3, the measuring device 11 comprises a static electronic sensor 17, 19 of the thermal mass type, mounted at a flow measuring channel (not illustrated). The thermal mass sensor 17, 19 comprises a heating element 17 placed symmetrically between two temperature probes 19 that detect respectively the temperature in the measuring channel upstream and downstream of the heating element 17. Based on the temperature difference detected, it is possible to calculate the flow that passes through the channel.

The housing body 9 of the sensor-valve assembly 10 further comprises an intercept device 12 which in turn comprises a closure member (not illustrated), the movement of which is controlled through an actuator 13.

As shown in figure 1, the intercept device 12 is connected directly in contact with the measuring device 11.

In the embodiment illustrated, the intercept device 12 is a ball valve and the actuator 13 is a direct current motor.

The sensor-valve assembly 10 for gas meter further comprises an electronic processing unit 14 (illustrated in detail in figure 3) operatively connected both with the measuring device 11 and with the intercept device 12 and placed on board the measuring device 11. Figure 3 shows the connection pins 25 to the intercept device 12.

Specifically, the electronic processing unit 14 is constrained to the measuring device 11 or to the intercept device 12 in such a manner whereby in use, the whole sensor-valve assembly 10, including electronic processing unit 14, is placed in the measuring compartment 21 of the gas meter 20, as illustrated in figure 2.

In use, the sensor-valve assembly 10 is housed in a hollow body 22 of the gas meter 20 that defines therein the measuring compartment 21. A gas inlet duct 23 and a gas outlet duct 24 are made in the walls of the hollow body 22. In particular, the sensor-valve assembly 10 is placed at the outlet duct 24 with the measuring device 11 being directly connected to such outlet duct 24.

The alternative preferred embodiment shown in figures 4a and 4b provides a gas meter 20' provided with a particularly compact measuring compartment 21' defined by a substantially tubular-shaped hollow body 22', thus allowing the compatibility with a multiplicity of different size standards relative to the requirements required by the utility branches. Indeed, it is possible to constrain a gas inlet fitting 23 and a gas outlet fitting 24 to the hollow body 22', which are sized in such a matter as to meet such requirements, such as for example the standard gauge at which the pipes are installed between the utility branches and the source.

Such specific shape of the gas meter 20' according to the invention is advantageously allowed by making the sensor-valve assembly 10 with the intercept device 12 connected directly in contact with the measuring device 11 in the housing body 9.

Regardless of the shape of the hollow body 22, an electronic processing board (not illustrated) configured to remotely read and manage the gas meter is placed in known manner outside the measuring compartment 21, and a battery (not illustrated) connected thereto.

The electronic processing unit 14 placed on board the sensor-valve assembly 10 and thereby placed inside the measuring compartment 21, is connected to the electronic processing board placed outside such measuring compartment 21 through a series of cables 15 and a connector 16 (illustrated in figure 2).

Such cables 15 configure a serial connection for receiving the control signals relative to controlling the intercept device 12 from the electronic processing board placed outside the measuring compartment 21 and transmitting the measurement values detected through the measuring device 11 to the electronic processing board, and also a connection for receiving the power supply originating from the battery (not illustrated), it also being external to the measuring compartment 21. Four cables 15 alone are therefore sufficient for such purpose.

The electronic processing unit 14 placed on board the sensor-valve assembly 10 is also connected to the intercept device 12 through the connection pins 25 made thereon. Such pins 25 configure a connection for controlling the intercept device 12 as a function of the inlet control signals sent to the electronic processing unit 14 by the electronic processing board placed outside the measuring compartment 21.

The electronic processing unit 14 placed on board the sensor-valve assembly 10 further comprises storage means 18 configured to store a plurality of measurement values detected by means of the measuring device 11.

A plurality of measurement values stored in the storage means 18 of the electronic processing board 14 are transmitted - through the connection between the electronic processing unit 14 placed on board the sensor-valve assembly 10 and the electronic processing board placed outside the measuring compartment 21 - to such electronic processing board for a subsequent processing thereof.

The electronic processing unit 14 is configured to control the opening and/or closing of the intercept device 12 based on the control signals received from the electronic processing board.

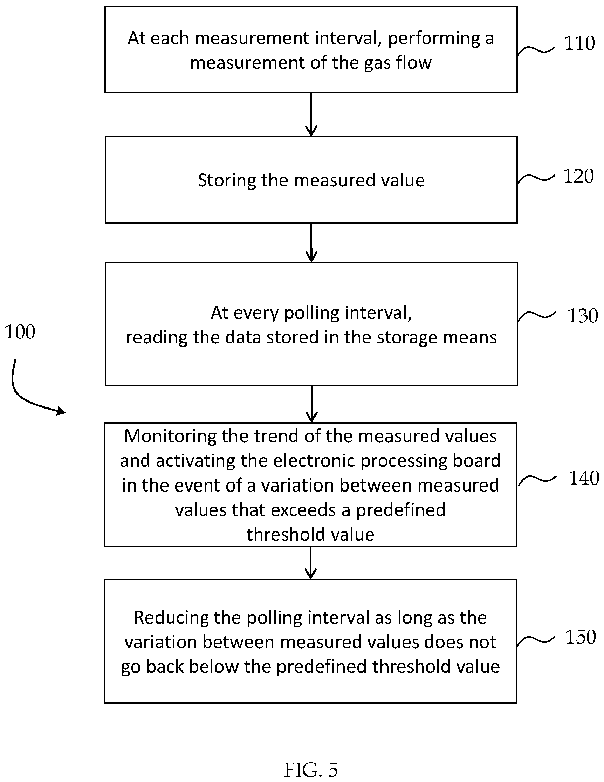

The operating method 100 of the gas meter according to the present invention is diagrammatically illustrated in figure 5.

The measuring device 11 repeatedly (for example, every 2 sec) performs measurements of the gas flow that passes through the sensor-valve assembly 10 (step 110) and stores them in the storage means 18 comprised in the electronic processing unit 14 inside the measuring compartment 21 (step 120).

In case of stationary flow, that is of substantially constant measurement values, the electronic processing board placed outside the measuring compartment 21 is activated (step 130) each predetermined time interval that is greater with respect to the measurement interval (for example, every 5 minutes, 15 minutes, 30 minutes or more) and takes the data stored in the storage means 18 comprised in the electronic processing unit 14 inside the measuring compartment 21, thus freeing the storage means for a new storage sequence.

In this manner, the number of activation operations of the electronic processing board placed outside the measuring compartment 21 is significantly reduced, resulting in considerable energy savings.

In case of repeated variation of the measurement values, the electronic processing unit 14 on the sensor-valve assembly 10 sends (step 140) for example, an activation signal to the electronic processing board placed outside the measuring compartment 21.

The electronic processing board thus reduces the time interval (step 150) between one polling operation and the next, possibly making it equal to the measurement interval, and analyses substantially in real time the trend of the measurement values to verify the situation of variation encountered.

Once the stationary flow operation has resumed, the electronic processing board placed outside the measuring compartment 21 sets the intervals for taking the measurement data from the storage means 18 of the electronic processing unit 14 to the initial values again, which are much greater with respect to the measurement interval, thereby being put into a condition of energy saving.

## Claims

1. Sensor-valve assembly (10) for gas meter (20) comprising a housing body (9) configured to be housed inside a measuring compartment (21) of a gas meter (20) defined inside a hollow body (22) of the gas meter (20) provided with a gas inlet duct (23) and a gas outlet duct (24), in the housing body (9) there being at least comprised a measuring device (11) configured to measure a gas flow passing through the group and an intercept device (12) to intercept the gas flow passing through the group, wherein it comprises at least one electronic processing unit (14) mounted in or on the housing body (9) and provided with storage means (18), the electronic processing unit (14) being operatively connected to the measuring device (11) and configured for storing in the storage means (18) a plurality of measurement values detected by the measuring device (11), the electronic processing unit (14) further being operatively connected to the intercept device (12) and configured to control its opening and/or closing.

2. Sensor-valve assembly (10) for gas meter (20) according to claim 1, wherein the intercept device (12) is connected directly to the measuring device (11).

3. Sensor-valve assembly (10) for gas meter (20) according to claim 1 or 2, wherein the measuring device (11) comprises a flow measuring channel and a static electronic sensor (17, 19) mounted at the measuring channel.

4. Sensor-valve assembly (10) for gas meter (20) according to claim 3, wherein the static electronic sensor (17, 19) is of the thermal mass or ultrasonic type.

5. Sensor-valve assembly (10) for gas meter (20) according to any one of the preceding claims, wherein the intercept device (12) comprises an actuator (13) and a closure member, wherein the movement of the closure member is controlled by the actuator (13).

6. Gas meter (20) comprising
a hollow body (22) internally defining a measuring compartment (21) provided with a gas inlet duct (23) and a gas outlet duct (24),
a sensor-valve assembly (10) according to claim 1 placed inside the measuring compartment (21) and in fluid communication with both, the inlet duct (23) and the outlet duct (24),
and
at least one electronic processing board placed outside the measuring compartment (21) and operatively connected to the sensor-valve assembly (10) for supplying power to the same and/or receiving flow measurement values detected by the same (10) and/or sending to the same (10) control signals for intercepting the flow, the sensor-valve assembly (10) comprising a housing body (9) in which at least one measuring device (11) configured to measure a gas flow passing through the group and at least one intercept device (12) to intercept the gas flow passing through the group are comprised, wherein the sensor-valve assembly (10) comprises at least one electronic processing unit (14) housed inside the measuring compartment (21) and provided with storage means (18), the electronic processing unit (14) being operatively connected to the measuring device (11) and configured for storing in the storage means (18) a plurality of measurement values detected by the measuring device (11), the electronic processing unit (14) further being operatively connected to the intercept device (12) and configured to control its opening and/or closing, the electronic processing board external to the measuring compartment (21) being operatively connected to the sensor-valve assembly (10) through the electronic processing unit (14).

7. Gas meter (20) according to claim 6, wherein the hollow body (22) has a tubular shape.

8. Gas meter (20) according to claim 6 or 7, in which the sensor-valve assembly (10) is placed at the outlet duct (24) with the measuring device (11) being directly connected to the outlet duct (24).

9. Gas meter (20) according to any one of claims 6 to 8, wherein the electronic processing board external to the measuring compartment (21) is connected to the electronic processing unit (14) of the sensor-valve assembly (10) placed inside the measuring compartment (21), by means of a set of connections consisting of a serial connection and a pair of connections for the power supply, without direct connections between the electronic processing board external to the measuring compartment (21) and the intercept device (12) of the sensor-valve assembly (10).

10. Method for controlling a gas meter (20) comprising a sensor-valve assembly (10) placed inside a measuring compartment (21) of the gas meter (20) and controlled and powered by means of an electronic processing board placed outside the measuring compartment (21) of the gas meter (20), the sensor-valve assembly (10) comprising a housing body (9) in which at least one measuring device (11) configured to measure a gas flow passing through the group and at least one intercept device (12) to intercept the gas flow passing through the group are comprised, and at least one electronic processing unit (14) housed inside the measuring compartment (21), provided with storage means (18) and operatively connected to the measuring device (11), to the intercept device (12) and to the electronic processing board external to the measuring compartment (21), wherein the method comprises the steps of:
- at each measurement interval, performing (110) a measurement of the gas flow that passes through the sensor-valve assembly (10) by means of the measuring device (11), and storing (120) the measured value in the storage means (18) of the electronic processing unit (14) of the sensor-valve assembly (10);
- at every polling interval, by means of the electronic processing board external to the measurement compartment (21), reading (130) the data stored in the storage means (18), wherein the polling interval lasts longer than the measuring interval.

11. Method for controlling a gas meter (20) according to claim 10, comprising in addition the steps of:
- monitoring (140) the trend of the measured values and activating the electronic processing board external to the measurement compartment (21) in the event of a variation between measured values that exceeds a predefined threshold value;
- reducing (150) the polling interval of the electronic processing board external to the measurement compartment (21) as long as the variation between measured values does not go back below the predefined threshold value.

## Patentansprüche

1. Sensorventilanordnung (10) für einen Gaszähler (20), die einen Gehäusekörper (9) umfasst, der derart konfiguriert ist, dass er innerhalb einer Messkammer (21) eines Gaszählers (20) angeordnet ist, die innerhalb eines Hohlkörpers (22) des Gaszählers (20) definiert ist, der mit einem Gaseinlasskanal (23) und einem Gasauslasskanal (24) versehen ist, wobei in dem Gehäusekörper (9) zumindest eine Messeinrichtung (11), die derart konfiguriert ist, dass sie einen durch die Gruppe hindurchgehenden Gasdurchfluss misst, und eine Unterbrechereinrichtung (12) zum Unterbrechen des durch die Gruppe hindurchgehenden Gasstroms umfasst, wobei sie mindestens eine elektronische Verarbeitungseinheit (14) umfasst, die in oder an dem Gehäusekörper (9) angebracht und mit Speichermitteln (18) versehen ist, wobei die elektronische Verarbeitungseinheit (14) mit der Messeinrichtung (11) wirkverbunden und zum Speichern einer Vielzahl von durch die Messeinrichtung (11) erfassten Messwerten in den Speichermitteln (18) konfiguriert ist, wobei die elektronische Verarbeitungseinheit (14) ferner mit der Unterbrechereinrichtung (12) wirkverbunden und zum Steuern ihres Öffnens und/oder Schließens konfiguriert ist.

2. Sensorventilanordnung (10) für einen Gaszähler (20) nach Anspruch 1, wobei die Unterbrechereinrichtung (12) direkt mit der Messeinrichtung (11) verbunden ist.

3. Sensorventilanordnung (10) für einen Gaszähler (20) nach Anspruch 1 oder 2, wobei die Messeinrichtung (11) einen Durchflussmesskanal und einen am Messkanal angebrachten statischen elektronischen Sensor (17, 19) umfasst.

4. Sensorventilanordnung (10) für einen Gaszähler (20) nach Anspruch 3, wobei der statische elektronische Sensor (17, 19) vom Typ thermischer Massensensor oder Ultraschallsensor ist.

5. Sensorventilanordnung (10) für einen Gaszähler (20) nach einem der vorhergehenden Ansprüche, wobei die Unterbrechereinrichtung (12) ein Stellglied (13) und ein Verschlusselement umfasst, wobei die Bewegung des Verschlusselements durch das Stellglied (13) gesteuert wird.

6. Gaszähler (20) umfassend
einen Hohlkörper (22), der im Inneren ein Messkammer (21) definiert, die mit einem Gaseinlasskanal (23) und einem Gasauslasskanal (24) versehen ist,
eine Sensorventilanordnung (10) nach Anspruch 1, die innerhalb der Messkammer (21) angeordnet ist und
in Fluidverbindung sowohl mit dem Einlasskanal (23) als auch mit dem Auslasskanal (24) steht, und
mindestens eine elektronische Verarbeitungsplatine, die außerhalb der Messkammer (21) angeordnet und mit der Sensorventilanordnung (10) wirkverbunden ist, um dieselbe mit Energie zu versorgen und/oder von derselben (10) erfasste Durchflussmesswerte zu empfangen und/oder Steuersignale zum Unterbrechen des Flusses an dieselbe (10) zu senden, wobei die Sensorventilanordnung (10) einen Gehäusekörper (9), in dem mindestens eine Messeinrichtung (11), die derart konfiguriert ist, dass sie einen durch die Gruppe hindurchgehenden Gasdurchfluss misst, und mindestens eine Unterbrechereinrichtung (12) zum Unterbrechen des durch die Gruppe hindurchgehenden Gasstroms umfasst, wobei die Sensorventilanordnung (10) mindestens eine elektronische Verarbeitungseinheit (14) umfasst, die innerhalb der Messkammer (21) angeordnet und mit Speichermitteln (18) versehen ist, wobei die elektronische Verarbeitungseinheit (14) mit der Messeinrichtung (11) wirkverbunden und derart konfiguriert ist, dass sie in den Speichermitteln (18) eine Vielzahl von durch die Messeinrichtung (11) erfassten Messwerten speichert, wobei die elektronische Verarbeitungseinheit (14) ferner mit der Unterbrechereinrichtung (12) wirkverbunden ist und so konfiguriert ist, um deren Öffnen und/oder Schließen zu steuern, wobei die elektronische Verarbeitungsplatine außerhalb der Messkammer (21) mit der Sensorventilanordnung (10) durch die elektronische Verarbeitungseinheit (14) wirkverbunden ist.

7. Gaszähler (20) nach Anspruch 6, wobei der Hohlkörper (22) eine Rohrform hat.

8. Gaszähler (20) nach Anspruch 6 oder 7, bei dem die Sensorventilanordnung (10) am Auslasskanal (24) angeordnet ist, wobei die Messeinrichtung (11) direkt mit dem Auslasskanal (24) verbunden ist.

9. Gaszähler (20) nach einem der Ansprüche 6 bis 8, wobei die elektronische Verarbeitungsplatine außerhalb der Messkammer (21) mit der elektronischen Verarbeitungseinheit (14) der Sensorventilanordnung (10), die innerhalb der Messkammer (21) angeordnet ist, mittels eines Satzes von Verbindungen, der aus einer Reihenschaltung und einem Paar von Verbindungen für die Energieversorgung besteht, ohne direkte Verbindungen zwischen der elektronischen Verarbeitungsplatine außerhalb der Messkammer (21) und der Unterbrechereinrichtung (12) der Sensorventilanordnung (10) verbunden ist.

10. Verfahren zum Steuern eines Gaszählers (20), der eine Sensorventilanordnung (10) umfasst, die innerhalb einer Messkammer (21) des Gaszählers (20) angeordnet ist und mittels einer elektronischen Verarbeitungsplatine, die außerhalb der Messkammer (21) des Gaszählers (20) angeordnet ist und gesteuert und mit Energie versorgt wird, wobei die Sensorventilanordnung (10) einen Gehäusekörper (9) umfasst, in dem mindestens eine Messeinrichtung (11), die so konfiguriert ist, dass sie einen durch die Gruppe hindurchgehenden Gasdurchfluss misst, und mindestens eine Unterbrechereinrichtung (12), die den durch die Gruppe hindurchgehenden Gasstrom unterbricht, und mindestens eine elektronische Verarbeitungseinheit (14) umfasst, die innerhalb der Messkammer (21) angeordnet, mit Speichermitteln (18) versehen und mit der Messeinrichtung (11), der Unterbrechereinrichtung (12) und der elektronischen Verarbeitungsplatine außerhalb der Messkammer (21) wirkverbunden ist, wobei das Verfahren die folgenden Schritte umfasst:
- bei jedem Messintervall, Durchführen (110) mittels der Messeinrichtung (11) einer Messung des Gasdurchflusses, der durch die Sensorventilanordnung (10) hindurchgeht, und Speichern (120) des gemessenen Wertes in der Speichereinrichtung (18) der elektronischen Verarbeitungseinheit (14) der Sensorventilanordnung (10);
- bei jedem Abfrageintervall, mittels der außerhalb der Messkammer (21) angeordneten elektronischen Verarbeitungsplatine Auslesen (130) der in den Speichermitteln (18) gespeicherten Daten, wobei das Abfrageintervall länger als das Messintervall dauert.

11. Verfahren zur Steuerung eines Gaszählers (20) nach Anspruch 10, das zusätzlich die folgenden Schritte umfasst:
- Überwachen (140) des Trends der Messwerte und Aktivieren der außerhalb der Messkammer (21) angeordneten elektronischen Verarbeitungsplatine im Falle einer Abweichung zwischen den Messwerten, die einen vordefinierten Schwellenwert überschreitet;
- Verringern (150) des Abfrageintervalls der außerhalb des Messraums (21) angeordneten elektronischen Verarbeitungsplatine, solange die Abweichung zwischen den Messwerten nicht unter den vordefinierten Schwellenwert sinkt.

## Revendications

1. Ensemble capteur-vanne (10) pour compteur de gaz (20) comprenant un corps de boîtier (9) configuré pour être reçu à l'intérieur d'un compartiment de mesure (21) d'un compteur de gaz (20) défini à l'intérieur d'un corps creux (22) du compteur de gaz (20) comportant un conduit d'entrée de gaz (23) et un conduit de sortie de gaz (24), dans le corps de boîtier (9) étant au moins compris un dispositif de mesure (11) configuré pour mesurer un écoulement de gaz traversant le groupe et un dispositif d'interception (12) pour intercepter l'écoulement de gaz traversant le groupe, l'ensemble comprenant au moins une unité de traitement électronique (14) montée dans ou sur le corps de boîtier (9) et comportant des moyens de stockage (18), l'unité de traitement électronique (14) étant reliée de manière fonctionnelle au dispositif de mesure (11) et configurée pour stocker, dans les moyens de stockage (18), une pluralité de valeurs de mesure détectées par le dispositif de mesure (11), l'unité de traitement électronique (14) étant en outre reliée de manière fonctionnelle au dispositif d'interception (12) et configurée pour commander son ouverture et/ou fermeture.

2. Ensemble capteur-vanne (10) pour compteur de gaz (20) selon la revendication 1, dans lequel le dispositif d'interception (12) est directement relié au dispositif de mesure (11).

3. Ensemble capteur-vanne (10) pour compteur de gaz (20) selon la revendication 1 ou 2, dans lequel le dispositif de mesure (11) comprend un canal de mesure d'écoulement et un capteur électronique statique (17, 19) monté au niveau du canal de mesure.

4. Ensemble capteur-vanne (10) pour compteur de gaz (20) selon la revendication 3, dans lequel le capteur électronique statique (17, 19) est du type à ultrasons ou à masse thermique.

5. Ensemble capteur-vanne (10) pour compteur de gaz (20) selon l'une quelconque des revendications précédentes, dans lequel le dispositif d'interception (12) comprend un actionneur (13) et un élément de fermeture, le mouvement de l'élément de fermeture étant commandé par l'actionneur (13).

6. Compteur de gaz (20) comprenant :
un corps creux (22) définissant intérieurement un compartiment de mesure (21) comportant un conduit d'entrée de gaz (23) et un conduit de sortie de gaz
(24), un ensemble capteur-vanne (10) selon la revendication 1, placé à l'intérieur du compartiment de mesure (21) et en communication fluidique à la fois avec le conduit d'entrée (23) et le conduit de sortie (24), et
au moins une carte de traitement électronique placée à l'extérieur du compartiment de mesure (21) et reliée de manière fonctionnelle à l'ensemble capteur-vanne (10) pour alimenter en énergie celui-ci et/ou recevoir des valeurs de mesure d'écoulement détectées par celui-ci (10) et/ou envoyer à celui-ci (10) des signaux de commande pour intercepter l'écoulement, l'ensemble capteur-vanne (10) comprenant un corps de boîtier (9) dans lequel au moins un dispositif de mesure (11) configuré pour mesurer un écoulement de gaz traversant le groupe et au moins un dispositif d'interception (12) pour intercepter l'écoulement de gaz traversant le groupe sont compris, l'ensemble capteur-vanne (10) comprenant au moins une unité de traitement électronique (14) reçue à l'intérieur du compartiment de mesure (21) et comportant des moyens de stockage (18), l'unité de traitement électronique (14) étant reliée de manière fonctionnelle au dispositif de mesure (11) et configurée pour stocker, dans les moyens de stockage (18), une pluralité de valeurs de mesure détectées par le dispositif de mesure (11), l'unité de traitement électronique (14) étant en outre reliée de manière fonctionnelle au dispositif d'interception (12) et configurée pour commander son ouverture et/ou fermeture, la carte de traitement électronique externe au compartiment de mesure (21) étant reliée de manière fonctionnelle à l'ensemble capteur-vanne (10) par l'intermédiaire de l'unité de traitement électronique (14).

7. Compteur de gaz (20) selon la revendication 6, dans lequel le corps creux (22) a une forme tubulaire.

8. Compteur de gaz (20) selon la revendication 6 ou 7, dans lequel l'ensemble capteur-vanne (10) est placé au niveau du conduit de sortie (24) avec le dispositif de mesure (11) directement relié au conduit de sortie (24).

9. Compteur de gaz (20) selon l'une quelconque des revendications 6 à 8, dans lequel la carte de traitement électronique externe au compartiment de mesure (21) est reliée à l'unité de traitement électronique (14) de l'ensemble capteur-vanne (10) placé à l'intérieur du compartiment de mesure (21), au moyen d'un ensemble de raccordements consistant en un raccordement en série et une paire de raccordements pour l'alimentation électrique, sans raccordement direct entre la carte de traitement électronique externe au compartiment de mesure (21) et le dispositif d'interception (12) de l'ensemble capteur-vanne (10).

10. Procédé de commande d'un compteur de gaz (20) comprenant un ensemble capteur-vanne (10) placé à l'intérieur d'un compartiment de mesure (21) du compteur de gaz (20) et commandé et alimenté au moyen d'une carte de traitement électronique placée à l'extérieur du compartiment de mesure (21) du compteur de gaz (20), l'ensemble capteur-vanne (10) comprenant un corps de boîtier (9) dans lequel au moins un dispositif de mesure (11) configuré pour mesurer un écoulement de gaz traversant le groupe et au moins un dispositif d'interception (12) pour intercepter l'écoulement de gaz traversant le groupe sont compris, et au moins une unité de traitement électronique (14) reçue à l'intérieur du compartiment de mesure (21), comportant des moyens de stockage (18) et reliée de manière fonctionnelle au dispositif de mesure (11), au dispositif d'interception (12) et à la carte de traitement électronique externe au compartiment de mesure (21), le procédé comprenant les étapes :
- à chaque intervalle de mesure, réaliser (110) une mesure de l'écoulement de gaz qui traverse l'ensemble capteur-vanne (10) au moyen du dispositif de mesure (11), et stocker (120) la valeur mesurée dans les moyens de stockage (18) de l'unité de traitement électronique (14) de l'ensemble capteur-vanne (10) ; et
- à chaque intervalle d'interrogation, au moyen de la carte de traitement électronique externe au compartiment de mesure (21), lire (130) les données stockées dans les moyens de stockage (18), l'intervalle d'interrogation durant plus longtemps que l'intervalle de mesure.

11. Procédé de commande d'un compteur de gaz (20) selon la revendication 10, comprenant de plus les étapes :
- surveiller (140) la tendance des valeurs mesurées et activer la carte de traitement électronique externe au compartiment de mesure (21) dans le cas d'une variation entre des valeurs mesurées qui dépasse une valeur de seuil prédéfinie ;
- réduire (150) l'intervalle d'interrogation de la carte de traitement électronique externe au compartiment de mesure (21) tant que la variation entre des valeurs mesurées ne redescend pas au-dessous de la valeur de seuil prédéfinie.
